# EUROPEAN PATENT APPLICATION

(11) **EP 3 226 369 A1**
(43) Date of publication of application: **04.10.2017**
(21) Application number: 15863065.7
(22) Date of filing: 27.11.2015
(51) Int. Cl.: H02J 3/14, H04M 11/00, H04Q 9/00

(54) **POWER CONTROL DEVICE, POWER CONTROL METHOD, AND POWER CONTROL PROGRAM**

(30) Priority: 27.11.2014 JP 2014240601
(71) Applicant: Kyocera Corporation, Kyoto-shi, Kyoto 612-8501 (JP)
(72) Inventor: KAKUDA, Yuji, Kyoto-shi, Kyoto 612-8501 (JP)
(74) Representative: Schwabe - Sandmair - Marx
(86) International application number: PCT/JP2015/005928
(87) International publication number: WO 2016/084391

(57) **Abstract**

A power control apparatus (10) includes a communication interface (21) that transmits and receives signals; a memory (22) that stores information related to power control to perform upon the communication interface (21) receiving a signal of a notification related to power consumption; and a controller (20) that, upon the communication interface (21) receiving a signal of the notification related to power consumption when a power control mode is set based on a predetermined condition, responds with a signal indicating agreement to content of the notification and performs power control based on the information, stored in the memory (22), that is related to power control.

## Description

### CROSS-REFERENCE TO RELATED APPLICATION

This application claims priority to and the benefit of Japanese Patent Application No. 2014-240601 filed November 27, 2014, the entire contents of which are incorporated herein by reference.

### TECHNICAL FIELD

The present disclosure relates to a power control apparatus, a power control method, and a power control program. In greater detail, the present disclosure relates to an apparatus that controls power in a consumer's facility or the like, a method for controlling power in such an apparatus, and a program that performs such power control.

### BACKGROUND

In recent years, research has progressed on power conditioners (inverters) that perform power conversion in association with a power generation apparatus, such as a solar cell or a fuel cell, and a rechargeable battery. Using such an inverter, interconnected operation or independent operation can be performed by supplying power from a distributed power source, such as a power generation apparatus or rechargeable battery, to a grid (commercial power supply) and/or a load. Using such an inverter, a rechargeable battery can also be charged with power of a power generation apparatus. Other than such inverters, research has also progressed on apparatuses such as a Home Energy Management System (HEMS) for appropriately controlling and managing the exchange of power in a power consumer's facility, such as a general household.

In association with the above-described control and management of power, attempts known as demand response (DR) have been made, whereby a power company or the like requests that someone such as a consumer for example reduce the consumption of power. DR generally means a change in power consumption patterns so as to reduce power usage on the consumer side, in accordance with the setting of electricity prices or payment of incentives, when the wholesale market price rises or the reliability of the grid lowers.

A number of proposals have been made as to how a DR notification will be complied with on the consumer side when the DR notification is provided to the consumer from the power supplier side (for example, see JP 2014-95947 A (PTL 1)).

### CITATION LIST

### Patent Literature

PTL 1: JP 2014-95947 A

### SUMMARY

### (Technical Problem)

The operation of DR continues to be the subject of various proposals and debate. It would be extremely useful for both power suppliers and consumers if various DR requests could be complied with flexibly to control power.

It would therefore be helpful to provide a power control apparatus, a power control method, and a power control program that are highly useful for consumers.

### (Solution to Problem)

A power control apparatus according to a first aspect of the present disclosure includes:
a communication interface configured to transmit and receive signals;
a memory configured to store information related to power control to perform upon the communication interface receiving a signal of a notification related to power consumption; and
a controller configured to, upon the communication interface receiving a signal of the notification when a power control mode is set based on a predetermined condition, respond with a signal indicating agreement to content of the notification and perform power control based on the information stored in the memory.

A power control method according to a second aspect of the present disclosure includes:
communicating to transmit and receive signals;
storing information related to power control to perform upon receiving a signal of a notification related to power consumption in the communicating step;
setting a power control mode based on a predetermined condition; and
controlling, upon receiving a signal of the notification in the communicating step when the power control mode is set in the setting step, to respond with a signal indicating agreement to content of the notification and to perform power control based on the information stored in the storing step.

A power control program according to a third aspect of the present disclosure causes a computer to execute the above-described power control method.

### (Advantageous Effect)

A power control apparatus, power control method, and power control program according to embodiments of the present disclosure can improve convenience for consumers.

### BRIEF DESCRIPTION OF THE DRAWINGS

In the accompanying drawings:
FIG. 1 is a functional block diagram schematically illustrating a power control system that includes a power control apparatus according to one of the disclosed embodiments;
FIG. 2 is a functional block diagram schematically illustrating a power control apparatus according to one of the disclosed embodiments;
FIG. 3 illustrates an example of a response envisioned upon receipt of a notification related to power consumption;
FIG. 4 illustrates another example of a response envisioned upon receipt of a notification related to power consumption;
FIG. 5 illustrates an example of operations of a power control apparatus according to one of the disclosed embodiments;
FIG. 6 is a flowchart illustrating operations of a power control apparatus according to one of the disclosed embodiments;
FIG. 7 is a flowchart illustrating operations of a power control apparatus according to one of the disclosed embodiments; and
FIG. 8 is a flowchart illustrating operations of a power control apparatus according to a modification to one of the disclosed embodiments.

### DETAILED DESCRIPTION

The following describes disclosed embodiments with reference to the drawings.

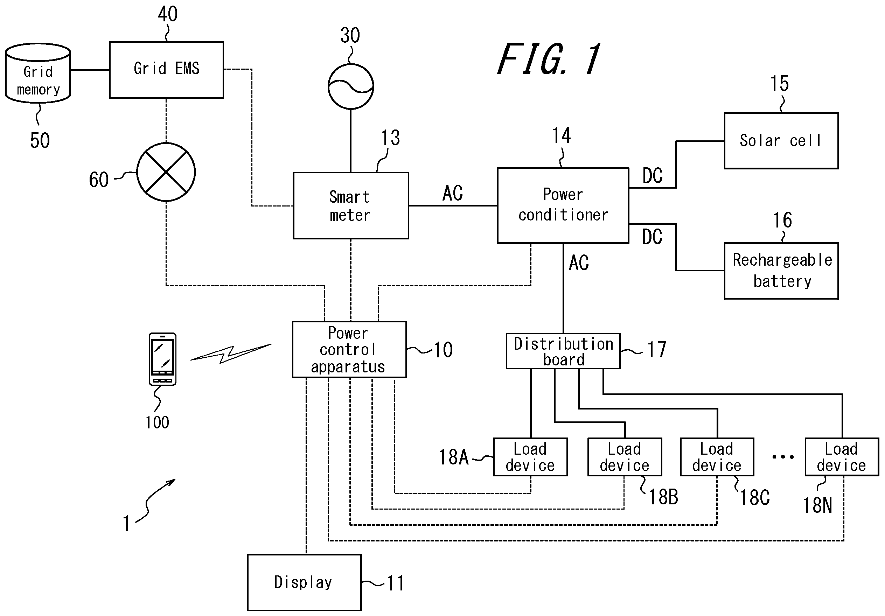

As illustrated in FIG. 1, a power control system 1 according to one of the disclosed embodiments is configured to include a power control apparatus 10. As illustrated in FIG. 1, the power control system 1 can also be configured to include a display 11, a smart meter 13, a power conditioner (inverter) 14, a solar cell 15, a rechargeable battery 16, a distribution board 17, and load devices 18.

In FIG. 1, the solid lines connecting functional blocks mainly indicate the flow of power. Also, in FIG. 1, the dashed lines connecting functional blocks mainly indicate the flow of control signals or transmitted information. The communication indicated by the dashed lines may be wired communication or wireless communication. In the case of wireless communication, communication is performed via a wireless router. The wireless router may be internal to the power control apparatus 10 or may be provided separately from the power control apparatus 10.

A variety of methods may be adopted for communication of control signals and information, including physical layers and logical layers. For example, communication by a short distance communication method such as ZigBee^{®} (ZigBee is a registered trademark in Japan, other countries, or both) or the like may be used for communication by the power control apparatus 10, display 11, smart meter 13, and power conditioner 14. A variety of transmission media, such as infrared communication, Power Line Communication (PLC), or the like, may also be used for communication between the power control apparatus 10 and the load device 18. A communication protocol that only prescribes the logical layer above the physical layers suitable for various types of communication, such as ZigBee Smart Energy Profile 2.0 (SEP 2.0), ECHONET Lite^{®} (ECHONET Lite is a registered trademark in Japan, other countries, or both), or the like may also be implemented.

Other than power supplied from the grid (commercial power source) 30, the power control system 1 can supply the load device 18 and the power control apparatus 10 with power generated by the solar cell 15 and with power discharged from among the power charged in the rechargeable battery 16.

The power control apparatus 10 controls and manages power of each device in the power control system 1 illustrated in FIG. 1. Further details on the configuration and control of the power control apparatus 10 are provided below. This power control apparatus 10 may be configured by a power control apparatus such as a Home Energy Management System (HEMS), Building Energy Management System (BEMS), or any other EMS. This power control apparatus 10 may be implemented not only by a dedicated apparatus, such as the above-described EMS, but also by a terminal such as a personal computer (PC), a computer incorporated in another functional unit, or the like.

The display 11 displays information transmitted by the power control apparatus 10. For example, the display 11 displays information related to power consumption. The display 11 may be configured using any display apparatus, such as an LCD or an organic/inorganic EL display.

The smart meter 13 is connected to the grid 30 and measures power supplied from the grid 30. The smart meter 13 can receive information from a grid Energy Management System (EMS) 40, such as a prediction related to power. The grid EMS 40 is a facility that makes a variety of predictions and performs control related to power. Generally, the grid EMS 40 is installed in a power company or the like. The grid EMS 40 may, for example, constitute a Meter Data Management System (MDMS). This grid EMS 40 includes a grid memory 50 that stores a variety of information related to power and can collect and accumulate information on the results measured by the smart meter 13. The grid EMS 40 can also connect to an external network 60, such as the Internet.

The power conditioner 14 converts DC power supplied from the solar cell 15 or the rechargeable battery 16 into AC power. The power conditioner 14 also supplies the converted AC power to the load devices 18 via a plurality of branches that are divided by the distribution board 17. Furthermore, the power conditioner 14 can convert AC power supplied by the grid 30 into DC power for charging the rechargeable battery 16. The power conditioner 14 also transmits the State Of Charge (SOC) of the rechargeable battery 16 to the power control apparatus 10. Based on control by the power control apparatus 10, the power conditioner 14 controls charging and discharging of the rechargeable battery 16. In greater detail, the power conditioner 14 initiates charging or discharging of the rechargeable battery 16 upon receiving a charge initiation or discharge initiation (charge/discharge initiation) control signal from the power control apparatus 10. After initiating charging or discharging, the power conditioner 14 transmits a charge initiation response or discharge initiation response to the power control apparatus 10. The power conditioner 14 also suspends charging or discharging of the rechargeable battery 16 upon receiving a charge suspension or discharge suspension (charge/discharge suspension) control signal from the power control apparatus 10. After suspending charging or discharging, the power conditioner 14 transmits a charge suspension response or discharge suspension response to the power control apparatus 10.

The solar cell 15 converts solar energy into DC power. In this embodiment, the solar cell 15 is assumed to generate power using sunlight with solar panels installed, for example, on the roof of a house. In the present disclosure, however, any type of solar cell 15 that can convert solar energy to power may be used. As described above, the power generated by the solar cell 15 is converted to AC power by the power conditioner 14 and can then be supplied to the load devices 18 or sold to the power company. The power generated by the solar cell 15 can also be charged in the rechargeable battery 16 or, for example, supplied to the load devices 18 in the form of DC power.

The rechargeable battery 16 is configured to be capable of supplying power by discharging charged power. The rechargeable battery 16 can charge with power supplied by the grid 30. As illustrated in FIG. 1, power discharged from the rechargeable battery 16 can also be supplied to the load devices 18 and to the power control apparatus 10. When power discharged from the rechargeable battery 16 is to be supplied to the power control apparatus 10 and to the load devices 18, a switch is made from power supplied by the grid 30 to power discharged by the rechargeable battery 16. In this embodiment, any type of rechargeable battery 16 that can charge and discharge power may be used.

The distribution board 17 divides the supplied power into a plurality of branches and distributes the power to the load devices 18. To each branch, either a representative load device 18 with large power consumption is directly connected, or a group of load devices 18 in each room is connected. Examples of a load device 18 with large power consumption include an air conditioner, a refrigerator, and an IH cooking heater. The group of load devices 18 includes load devices connected to a number of power outlets provided in each room. The type of load device connected to the power outlet is uncertain.

In FIG. 1, the load devices 18 illustrated as being connected to the power control system 1 are load devices 18A, 18B, 18C, and 18N. The number of load devices 18 connected to the power control system 1 is not limited to this example, however, and may be any number. The load devices 18 may, for example, be a variety of household appliances, such as a television, air conditioner, refrigerator, and the like. These load devices 18 are connected to the power conditioner 14 via the distribution board 17 and are supplied power. The load devices 18 are not limited to being connected to the grid 30 via the power conditioner 14 and may be connected to the grid 30 directly, without intervention of the power conditioner 14.

As illustrated in FIG. 1, the power control apparatus 10 according to this embodiment for example can communicate with a predetermined communication terminal 100, such as a mobile terminal. Communication between the power control apparatus 10 and the communication terminal 100 may be over a wired connection or a wireless connection. For the sake of convenience in the case of a mobile terminal, however, wireless communication may be used. This predetermined communication terminal 100 may be configured as a dedicated communication terminal, a pager, or the like, or may be configured as a widely available mobile phone, smartphone, tablet, or the like.

In this embodiment, upon receipt of the below-described DR event notification, the power control apparatus 10 can transmit the notification to the communication terminal 100 for display. In this way, upon the power control apparatus 10 receiving the below-described DR event notification, the user who is carrying the communication terminal 100 can learn the content of the notification even when the user is at a location distant from the facility where the power control apparatus 10 is installed.

The following describes the power control apparatus 10 according to this embodiment in greater detail.

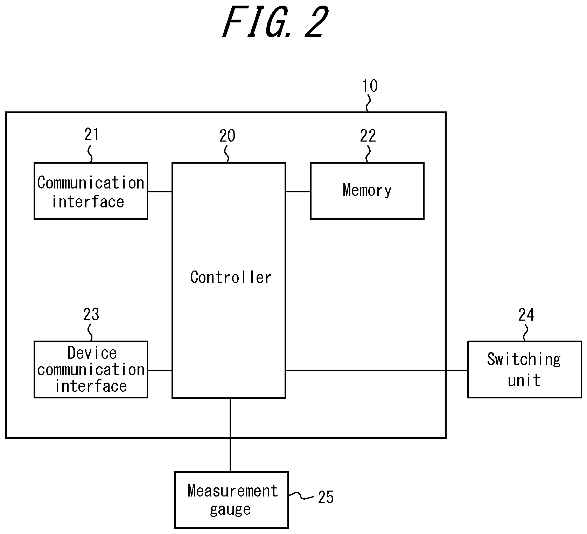

As illustrated in FIG. 2, the power control apparatus 10 includes a controller 20, a communication interface 21, and a memory 22. The power control apparatus 10 may also be configured to include a device communication interface 23, a switching unit 24, and a measurement gauge 25.

The controller 20 controls and manages the power control apparatus 10 overall, starting with the functional components constituting the power control apparatus 10. The controller 20 may, for example, be configured by any processing unit, such as a microcomputer, a processor (CPU), or the like. In this embodiment, the controller 20 performs control to set a power control mode of the power control apparatus 10 based on a predetermined condition. The power control mode is further described below. In this embodiment, the controller 20 performs power control of the load devices 18 and the like for which power consumption is controlled by the power control apparatus 10. The control performed by the controller 20 is further described below.

The communication interface 21 exchanges signals with a variety of communication devices. As illustrated in FIG. 1, the communication interface 21 implements communication between the power control apparatus 10 and the external network 60, such as the Internet, and communication between the power control apparatus 10 and the communication terminal 100. The communication interface 21 may perform communication by any wired or wireless method. As described above, however, the communication interface 21 may include a variety of functional components such as an antenna, an RF unit, and the like to perform wireless communication when communicating with the communication terminal 100. The communication interface 21 exchanges signals in accordance with control by the controller 20.

In greater detail, the communication interface 21 is configured using a device for implementing wired communication, such as Ethernet^{®} (Ethernet is a registered trademark in Japan, other countries, or both), RS232C, or RS485, or wireless communication such as WiFi, LTE, CDMA, Bluetooth^{®} (Bluetooth is a registered trademark in Japan, other countries, or both), or Wi-SUN. For wired communication, the communication interface includes a communication line, a connector connected to the communication line, and a transmission/reception processor that transmits and receives signals to and from the connector. If communication is wireless, the communication interface includes an antenna, an RF module, the processor of a baseband IC, and the like.

The memory 22 is a memory that stores a variety of programs and a variety of information. The memory 22 can store the results of data analysis and various calculations performed by the controller 20. The memory 22 also stores algorithms, a variety of reference tables such as lookup tables (LUT), and the like that are used for data analysis, various calculations, and the like performed by the controller 20. In this embodiment, the memory 22 stores information related to power control to perform upon the communication interface 21 receiving a signal for a notification related to power consumption, such as a DR event notification. The power control based on information stored in the memory 22 is further described below.

The device communication interface 23 communicates with each of the load devices 18 illustrated in FIG. 1. In this embodiment, the device communication interface 23 at least communicates with load devices 18 for which power consumption is controlled by the power control apparatus 10. The device communication interface 23 may communicate with any method, with a wired or wireless connection. As described above, the device communication interface 23 may use a variety of transmission media, such as infrared communication, PLC, or the like, and may implement a variety of communication protocols above the physical layers suitable for these types of communication. The device communication interface 23 exchanges signals in accordance with control by the controller 20.

The switching unit 24 allows switching into and out of the power control mode. In this embodiment, the power control mode is an operation mode that the user of the power control apparatus 10, i.e. the consumer, sets in advance to specify the way in which devices in the consumer's facility where the power control apparatus 10 is installed are to be used. The power control mode may, for example, be control to reduce the amount of power used by load devices or control to accumulate power in the rechargeable battery. As described below, in predetermined cases, the power control mode is applied when the consumer is absent from the consumer's facility or when the consumer is present (at home) in the consumer's facility. In the following explanation, an "away from home mode" is described as an example of a power control mode in the case of the consumer being absent from the consumer's facility.

The switching unit 24 can be configured using any switch or the like. For example, in the case of the switching unit 24 being configured by a push-button switch, the switching unit 24 may be configured so that the power control apparatus 10 enters the away from home mode upon the button being pushed once, and so that the away from home mode of the power control apparatus 10 is released upon the button being pushed again. When the power control apparatus 10 is in the away from home mode, for example the words "away from home" may be displayed on the push-button switch, and an indication of the "away from home mode" may be displayed on the display 11. In this way, the switching unit 24 can switch between a state in which the power control apparatus 10 is in the away from home mode and a state in which the power control apparatus 10 is not in the away from home mode.

The measurement gauge 25 measures the amount of gas usage or the amount of water usage in the consumer's facility where the power control apparatus 10 is installed. As long as the measurement gauge 25 can measure the amount of gas usage or the amount of water usage, the measurement gauge 25 may be configured using any type of measuring instrument. For example, the measurement gauge 25 itself may be configured as a gas meter that measures the amount of gas usage, or the measurement gauge 25 may be installed in a gas meter and acquire the amount of gas usage. The measurement gauge 25 itself may also be configured as a water meter that measures the amount of water usage, or the measurement gauge 25 may be installed in a water meter and acquire the amount of water usage. The amount of gas usage or amount of water usage measured by the measurement gauge 25 is transmitted to the controller 20. As a result, the controller 20 can recognize the amount of gas usage or the amount of water usage in the consumer's facility where the power control apparatus 10 is installed. Based on the amount of gas usage or the amount of water usage in the consumer's facility recognized in this way, the controller 20 determines whether the consumer is present or not. When the consumer is absent, the controller 20 switches to the away from home mode.

The following describes the notification related to power consumption in this embodiment.

As described above, a number of proposals have been made as to how a DR notification will be complied with on the consumer side when the DR notification is provided to the consumer from the power supplier side, and future operation has not been entirely finalized. The power control apparatus 10 according to this embodiment mainly aims to allow flexible compliance with notification of a request related to power consumption, such as DR. In the present disclosure, a "notification related to power consumption" is not limited to a notification related to DR. A typical example, however, may be considered a notification requesting a reduction in power supplied from the grid 30 among the power controlled by the power control apparatus 10. For the sake of convenience, such a notification related to power consumption is referred to as a "DR event notification". The "notification related to power consumption" may also be a notification seeking use of power. Furthermore, the "notification related to power consumption" may be for the purpose of reducing power that is generated by a solar cell and caused to flow to the grid 30 side. In this case, the "notification related to power consumption" for example provides notification that less of the power generated by the solar cell should be caused to flow to the grid 30, so that the power is consumed within the consumer's facility instead.

This DR event notification may, for example, be a request to the consumer to reduce consumption of power for a reason such as a tight future power demand. Such a notification may be provided to the consumer well in advance, by indicating a specific date. It is also envisioned, however, that such notification may be provided abruptly, for example due to a sudden escalation in the power demand. In many proposals, if the consumer accepts the content of the notification and cooperates in reducing power consumption, the consumer is awarded some sort of incentive by the issuer of the notification or by the power supplier.

Upon receipt of a DR event notification on the consumer side, the consumer can send a response indicating agreement to the content of the notification if the consumer is present in the facility where power is supplied and can confirm the content of the notification. As described above, the power control mode may be applied even when the consumer is at home. This approach is effective when, for example, the consumer is at home but does not realize that the power control apparatus 10 has received a DR event notification.

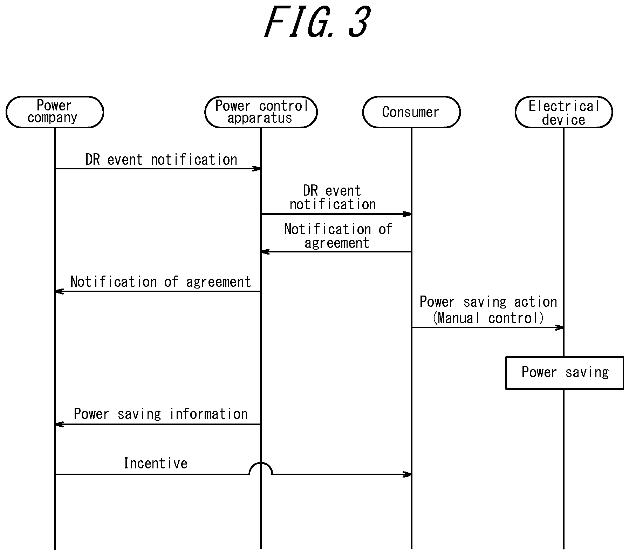

As illustrated in FIG. 3, upon the power control apparatus receiving a DR event notification transmitted by the power company, which is the power supplier side, the consumer can learn the content of the DR event notification by confirming the display or the like of the power control apparatus if the consumer is at home. When the consumer agrees to the content of the DR event notification, the consumer can send a response to the power company indicating agreement to the content of the DR event notification by, for example, operating the power control apparatus. Subsequently, the consumer can take power saving actions by controlling a variety of electrical devices, for example by hand, so as to reduce the power consumption of the electrical devices. Information on the saved power is then transmitted from the power control apparatus to the power company, and the consumer can receive an incentive from the power company corresponding to the degree of cooperation in power saving.

FIG. 3 illustrates an example in which, after responding to indicate agreement to the content of the DR event notification, the consumer takes power saving actions by controlling electrical devices manually himself. If the content of such power saving actions is stored in a memory or the like in advance, there is little need for the consumer to save power by controlling electrical devices manually himself.

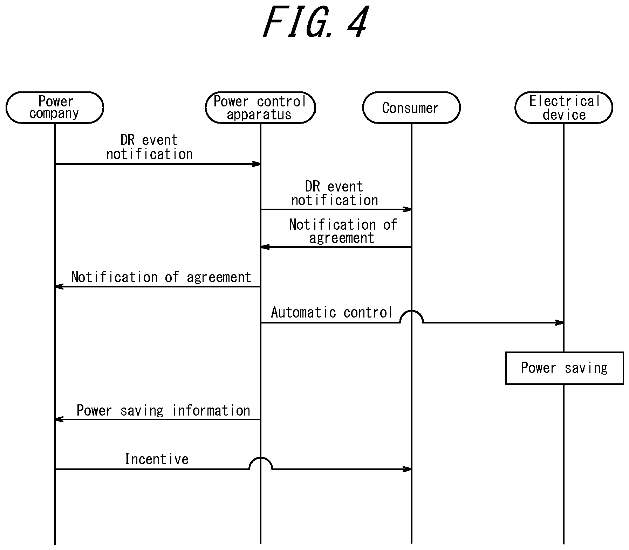

For example, as illustrated in FIG. 4, the consumer may learn the content of the DR event notification and send a response to the power company indicating agreement to the content. In response, the power control apparatus may then control a variety of electrical devices so that power saving actions are taken. With this sort of control as well, the power consumption of the electrical devices is reduced, and the consumer can receive an incentive corresponding to the degree of cooperation in power saving.

On the other hand, when the consumer is absent from the facility to which power is being supplied, it is envisioned that the user, who is the consumer, will not be able to confirm the content of the transmitted notification and respond to agree to the content of the notification. Therefore, anticipating the case of the consumer being absent from the facility to which power is supplied, the power control apparatus could, upon receiving a DR event notification from the power company, transmit the DR event notification to a predetermined communication terminal being carried by the consumer.

For example, as illustrated in FIG. 4, upon receiving a DR event notification transmitted from the power company, the power control apparatus may transmit the DR event notification to a predetermined communication terminal in the consumer's possession. It is envisioned that the DR event notification transmitted in this way could take a variety of forms, such as an e-mail or a notification that is generated by particular application software. With this approach, even when absent from the facility to which power is supplied, the consumer can learn the content of the DR event notification and respond indicating agreement to the content. Subsequently, power saving actions can be taken by the power control apparatus controlling a variety of electrical devices. With this sort of control as well, the power consumption of the electrical devices is reduced, and the consumer can receive an incentive corresponding to the degree of cooperation in power saving.

The consumer might not notice the DR event notification transmitted to the consumer's communication terminal, however, or might not be able to confirm the content of the notification. Therefore, even when transmitting a DR event notification in this way, there may be circumstances in which the consumer cannot respond indicating agreement with the content of the notification. In such circumstances, the consumer might not be able to receive an expected incentive because of power saving actions not being taken as a result of not responding to agree to the content of a DR event notification.

Therefore, the power control apparatus 10 according to this embodiment sets an away from home mode, in which the consumer is absent, so that power saving actions are taken and the incentive can be received even in the above-described circumstances.

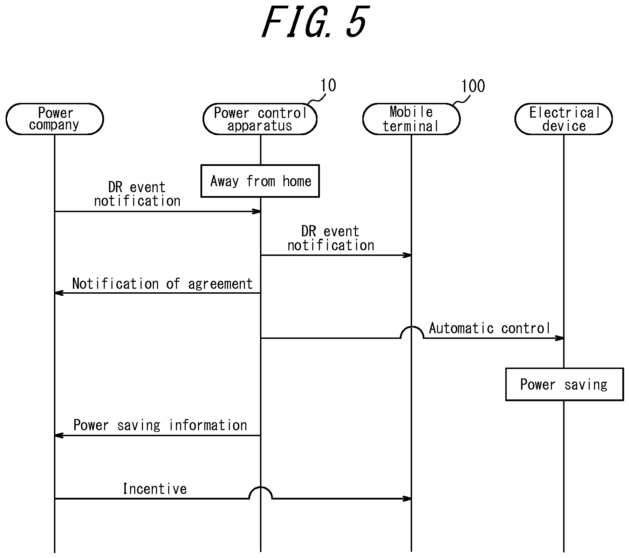

FIG. 5 illustrates operations when the power control apparatus 10 according to this embodiment receives a DR event notification in the away from home mode.

As illustrated in FIG. 5, when the power control apparatus 10 is in the away from home mode and a DR event notification transmitted from the power company is received, the power control apparatus 10 transmits a DR event notification to the predetermined communication terminal 100 in the consumer's possession in the same way as the example in FIG. 4. In this embodiment, as illustrated in FIG. 5, after transmitting the DR event notification to the communication terminal 100, the power control apparatus 10 responds to the power company indicating agreement to the content of the notification, even if an indication of agreement to the content of the notification is not received from the communication terminal 100. When transmitting this indication of agreement to the content of the notification, the power control apparatus 10 may also indicate that the consumer is not home (or indicate the away from home mode) when the power control apparatus 10 is in the away from home mode. By the power control apparatus 10 also transmitting to the power company an indication that the consumer is not home, the power company can, for example, learn that execution of precise control would be difficult, or that it would be difficult to get the consumer to readjust the amount of reduction in power consumption.

In this embodiment, after responding to the power company indicating agreement to the content of the DR event notification, the power control apparatus 10 automatically controls a variety of electrical devices so that power saving actions are taken. With this sort of control, the power consumption of the electrical devices is reduced even when the consumer does not respond indicating agreement to the content of the DR event notification, and the consumer can receive an incentive corresponding to the degree of cooperation in power saving.

Next, the away from home mode in this embodiment is described in greater detail. In this embodiment, the power control apparatus 10 is not only set to the away from home mode as a result of operation by the consumer but is also set to the away from home mode automatically based on a variety of predetermined conditions.

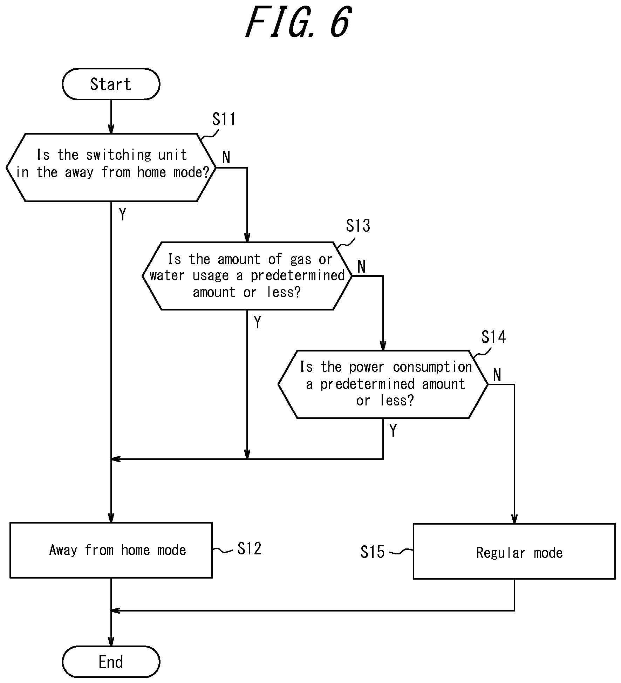

Upon the start of operations illustrated in FIG. 6, the controller 20 of the power control apparatus 10 determines whether the switching unit 24 is switched to the away from home mode (step S11). When the switching unit 24 is switched to the away from home mode in step S11, the controller 20 sets the away from home mode of the power control apparatus 10 (step S12), and these operations terminate. In this embodiment, the controller 20 may thus set the away from home mode of the power control apparatus 10 when the switching unit 24 is switched to the away from home mode. As a result, the consumer can set the power control apparatus 10 to the away from home mode by operating the switching unit 24, for example when leaving the house.

When the switching unit 24 is not switched to the away from home mode in step S11, the controller 20 determines whether the amount of gas usage or the amount of water usage measured by the measurement gauge 25 is a predetermined amount or less in a predetermined time (step S13). When the amount of gas usage or the amount of water usage in step S13 is a predetermined amount or less, the controller 20 sets the away from home mode of the power control apparatus 10 (step S12), and these operations terminate. In this embodiment, the controller 20 may thus set the away from home mode of the power control apparatus 10 when the amount of gas usage or the amount of water usage measured by the measurement gauge 25 falls to a predetermined threshold or less in a predetermined time. As a result, the consumer can set the power control apparatus 10 to the away from home mode even without operating the switching unit 24 when, for example, leaving the house.

Here, the above-described predetermined time and predetermined threshold may be set appropriately, in accordance with the consumer's facility in which the power control apparatus 10 is installed, to a time and a threshold of the usage amount that allow for a determination that the consumer is not present based on the amount of gas or water usage. Also, the controller 20 may calculate the above-described predetermined time and predetermined threshold by acquiring and recording a pattern of the consumer's gas or water usage.

When the amount of gas usage or the amount of water usage in step S13 is not a predetermined amount or less, the controller 20 determines whether the consumption of power controlled by the power control apparatus 10 is a predetermined amount or less in a predetermined time (step S14). When the consumption of power in step S14 is a predetermined amount or less, the controller 20 sets the away from home mode of the power control apparatus 10 (step S12), and these operations terminate. In this embodiment, the controller 20 may thus set the away from home mode of the power control apparatus 10 when the power consumption controlled by the power control apparatus 10 falls to a predetermined threshold or less in a predetermined time. As a result, the consumer can set the power control apparatus 10 to the away from home mode even without operating the switching unit 24 when, for example, leaving the house.

Here as well, the above-described predetermined time and predetermined threshold may be set appropriately, in accordance with the consumer's facility in which the power control apparatus 10 is installed, to a time and a threshold of power consumption that allow for a determination that the consumer is not present based on the amount of power consumption. Also, the controller 20 may calculate the above-described predetermined time and predetermined threshold by acquiring and recording a pattern of the consumer's power consumption.

When the consumption of power in step S14 is not a predetermined amount or less, the controller 20 determines that the consumer is not absent, and, without setting the away from home mode of the power control apparatus 10 (step S15), these operations terminate.

In this embodiment, the controller 20 thus performs control to set the away from home mode based on a predetermined condition. As a result, the power control apparatus 10 can be set to the away from home mode either manually or automatically.

Next, operations for implementing the response when the power control apparatus 10 receives a DR event notification as illustrated in FIG. 5 is described.

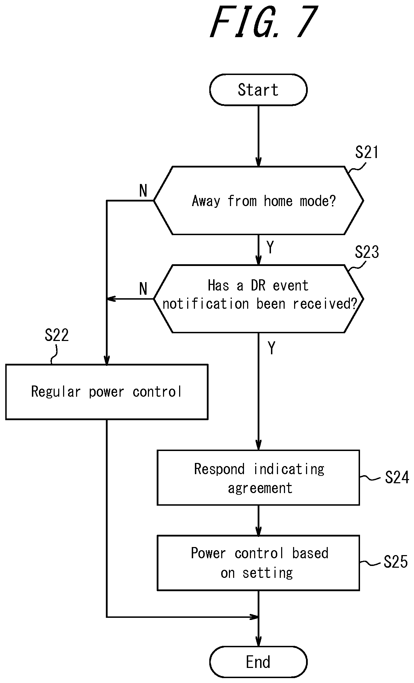

Upon the start of operations illustrated in FIG. 7, the controller 20 of the power control apparatus 10 determines whether the power control apparatus 10 is in the away from home mode (step S21). When the power control apparatus 10 is not in the away from home mode in step S21, the controller 20 performs regular power control (step S22). Here, regular power control is control set to be performed by the power control apparatus 10 when not in the away from home mode. The content of such control may be stored in the memory 22 in advance. In greater detail, this power control may be envisioned as control to supply the power output by the solar cell 15 to the rechargeable battery 16 or the load devices 18, charging/discharging control of the rechargeable battery 16, control of the power consumption by each load device 18, or the like.

On the other hand, when the power control apparatus 10 is in the away from home mode in step S21, the controller 20 determines whether the communication interface 21 has received a DR event notification (step S23). When a DR event notification has not been received in step S23, the controller 20 performs regular power control (step S22).

When a DR event notification has been received in step S23, the controller 20 responds indicating agreement to the content of the DR event notification (step S24). After responding to indicate agreement in step S24, the controller 20 performs the power control that is set to be performed upon receipt of a DR event notification (step S25). Here, the power control that is set to be performed upon receipt of a DR event notification may be stored in the memory 22 in advance. In step S25, the controller 20 can control each load device 18 via the device communication interface 23.

The power control that is set to be performed upon receipt of a DR event notification may, for example, be control to turn off or save power of an electrical device, among the load devices 18, that can completely stop operating when the consumer is absent without posing a problem. Such power saving control may be set in advance by the consumer and stored in the memory 22 as an operation to be performed upon receipt of a DR event notification. Also, such power saving control may be for the controller 20 to determine, based on the content of the DR event notification, which device to subject to power saving among the load devices 18 for which the consumer allows power saving. For example, a setting may be made so that, when charging the rechargeable battery 16 with power from the grid 30 in anticipation of future power consumption, charging of the rechargeable battery 16 is not suspended even upon receiving a DR event notification. Furthermore, a setting may be made so that, upon receipt of a DR event notification, the power output by the solar cell 15 or the rechargeable battery 16 is increased so as to reduce the power supplied from the grid 30. In this way, the power control to perform upon receipt of a DR event notification may be set in a variety of ways in accordance with the consumer's preference or needs.

As described above, in this embodiment, upon the communication interface 21 receiving the signal of a notification related to power consumption when the away from home mode is set, the controller 20 performs control to respond with a signal indicating agreement to the content of the notification. After responding in this way with a signal indicating agreement, the controller 20 performs power control based on information, stored in the memory 22, that is related to power control to be performed upon receipt of the notification. Based on the above-described information related to power control, the controller 20 may control the device communication interface 23 to perform power control of the load devices 18.

When receiving a DR event notification in step S23, the controller 20 may be configured to respond indicating agreement to the content of the notification and to perform set power control only when the content of the notification matches a predetermined condition. In other words, the controller 20 may perform power control based on information, stored in the memory 22, that is related to the power control when the content of the DR event notification matches a predetermined condition. In this case, the consumer can set and store in the memory 22, in advance, a condition for agreeing to the content, a condition for not agreeing to the content, or the like upon receiving the DR event notification. For example, a power threshold may be set, and a condition may be set to accept a DR event notification requesting a reduction in power up to the threshold and not to accept a DR event notification requesting a reduction in power exceeding the threshold. Additionally, by setting a variety of conditions in accordance with the content of the transmitted DR event notification, the set power control may be performed only when the content of the notification matches the conditions. This approach makes it unlikely that, with respect to a DR event notification not desired by the consumer, the power control apparatus 10 will respond agreeing to the content of the notification and perform power control not desired by the consumer.

In this way, the power control apparatus 10 according to this embodiment allows flexible compliance with notification of a request related to power, thereby significantly increasing convenience.

Next, a modification to this embodiment is described.

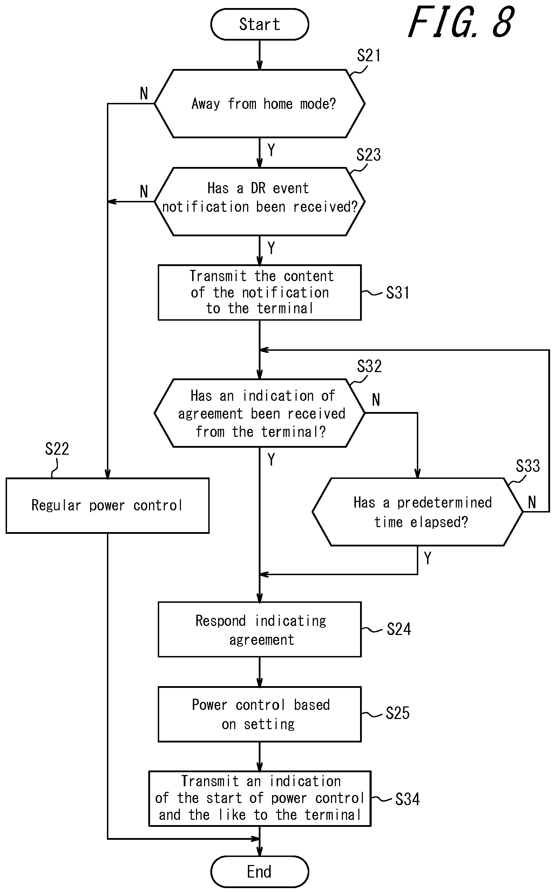

The operations in FIG. 8 represent a change to the operations in FIG. 7. Therefore, a description of matter overlapping with FIG. 7 is simplified or omitted.

In the operations of the power control apparatus 10 illustrated in FIG. 8, upon receiving a DR event notification in step S23, the controller 20 transmits the content of the notification to the communication terminal 100 carried by the consumer (step S31). In other words, in this embodiment, upon the communication interface 21 receiving a signal of a DR event notification, the controller 20 may perform control to transmit a signal representing the content of the notification to a predetermined communication terminal 100. In this case, the controller 20 performs control to transmit the content of the received DR event notification to the communication terminal 100 via the communication interface 21. The content of the received DR event notification may take a variety of forms, such as being transmitted to the communication terminal 100 as an e-mail in text format or being transmitted as a notification generated by particular application software. As a result, the consumer can learn the content of the notification even when the power control apparatus 10 receives the DR event notification while the consumer is not home.

Once the content of the notification is transmitted to the communication terminal 100 in step S31, the controller 20 may, after waiting for a response of agreement from the communication terminal 100 (step S32), respond indicating agreement to the content and perform the set power control. In other words, in this embodiment, when the controller 20 receives a signal indicating agreement to the content of the DR event notification from a predetermined communication terminal 100, the controller 20 may perform power control based on information, stored in the memory 22, that is related to power control. In this case, the controller 20 can be configured so that, only in the case of receiving a response indicating that the consumer agrees to the content of a DR event notification transmitted to the communication terminal 100, the controller 20 responds to the issuer of the notification indicating agreement to the content and then performs the set power control. As a result, when the power control apparatus 10 receives a DR event notification, the determination of whether to agree to the content of the notification and perform set power control can be left up to a consumer who is not present.

The controller 20 may be configured to perform power control based on information, stored in the memory 22, that is related to power control without waiting for a response indicating agreement from the communication terminal 100. In this case, the controller 20 may transmit, to the communication terminal 100, an indication of execution of power control along with an indication of receipt of the DR event notification. Also, a configuration may be adopted whereby the controller 20 can suspend power control upon the communication terminal 100 transmitting an indication to suspend compliance with the DR event notification to the controller 20. As a result, for example when the consumer has mistakenly set the away from home mode while still at home, the consumer can realize that the away from home mode is set by seeing the notification to the communication terminal 100 and can suspend compliance with the DR event.

When waiting for a response of agreement from the communication terminal 100 in step S32, the controller 20 may respond indicating agreement to the content and perform the set power control after waiting for a predetermined time to elapse (step S33). In other words, in this embodiment, the controller 20 may perform power control based on information, stored in the memory 22, that is related to power control once a predetermined time elapses after the communication interface 21 receives a signal of a DR event notification. It is envisioned that the DR event notification will explicitly specify the timing at which the power supply side requests a reduction in power consumption, i.e. the point in time at which the power supply side wishes for the reduction in power consumption to start. Accordingly, the power control apparatus 10 can wait for a response from the consumer's communication terminal 100 until the timing at which this reduction in power consumption is to start. In this case, the controller 20 sets the above-described predetermined time to be the length of time until the start of the reduction in power consumption. When there is no response from the communication terminal 100 even after this predetermined time elapses, the controller 20 can respond indicating agreement to the content and perform the set power control. As a result, while reflecting the consumer's wishes, the controller 20 can agree to the content of the DR event notification and perform the set power control when there is no response from the consumer.

In step S25, once the power control apparatus 10 begins power control based on the setting, the controller 20 may transmit a notification for example indicating the start of the power control to the communication terminal 100 (step S34). Additionally, for example once the power control for the content included in the DR event notification is complete, the controller 20 may transmit a notification indicating completion of the power control to the communication terminal 100. Furthermore, once the power control corresponding to the DR event notification is complete, the controller 20 may transmit information on the result of the power control to the communication terminal 100, such as information on the incentive for power that was saved by the power control. In other words, based on information that is related to power control and is stored in the memory 22, the controller 20 in this embodiment may perform control to transmit, to a predetermined communication terminal 100, a signal indicating the start of power control, indicating completion of the power control, indicating information on the result of the power control, or the like. As a result, even when away from home, the consumer can learn that the power control apparatus 10 has started or completed power control in response to a DR event notification and can learn information about the result of completion.

Although the present disclosure is based on the accompanying drawings and on examples, it is to be noted that various changes and modifications will be apparent to those skilled in the art based on the present disclosure. Therefore, such changes and modifications are to be understood as included within the scope of the present disclosure. For example, the functions and the like included in the various functional components, means, and steps may be reordered in any logically consistent way. Furthermore, functional components or steps may be combined into one or divided. The above embodiments of the present disclosure are not limited to being implemented precisely as described and may be implemented by combining or partially omitting the features thereof.

Much of the subject matter of the present disclosure is described as a series of operations executed by a computer system and other hardware that can execute program instructions. Examples of the computer system and other hardware include a general-purpose computer, a Personal Computer (PC), a dedicated computer, a workstation, a Personal Communications System (PCS), an electronic notepad, a laptop computer, and other programmable data processing apparatuses. It should be noted that in each embodiment, various operations are executed by a dedicated circuit (for example, individual logical gates interconnected in order to execute a particular function) implemented by program instructions (software), or by a logical block, program module, or the like executed by one or more processors. The one or more processors that execute a logical block, program module, or the like are, for example, one or more of each of the following: a microprocessor, a central processing unit (CPU), an Application Specific Integrated Circuit (ASIC), a Digital Signal Processor (DSP), a Programmable Logic Device (PLD), a Field Programmable Gate Array (FPGA), a controller, a microcontroller, an electronic device, another apparatus designed to be capable of executing the functions disclosed herein, and/or a combination of any of the above. The embodiments disclosed herein are, for example, implemented by hardware, software, firmware, middleware, microcode, or a combination of any of these.

The machine-readable, non-transitory storage medium used here may also be configured by a computer-readable, tangible carrier (medium) in the categories of solid-state memory, magnetic disks, and optical discs. Data structures and an appropriate set of computer instructions, such as program modules, for causing a processor to execute the techniques disclosed herein are stored on these media. Examples of computer-readable media include an electrical connection with one or more wires, a magnetic disk storage medium, or another magnetic or optical storage medium (such as a Compact Disc (CD), Digital Versatile Disc (DVD^{®}), and Blu-ray disc^{®} (DVD and Blu-ray disc are each a registered trademark in Japan, other countries, or both)), portable computer disk, Random Access Memory (RAM), Read-Only Memory (ROM), rewritable programmable ROM such as EPROM, EEPROM, or flash memory, another tangible storage medium that can store information, or a combination of any of these. The memory may be provided internal and/or external to a processor/processing unit. As used in the present disclosure, the term "memory" refers to all types of long-term storage, short-term storage, volatile, non-volatile, or other memory. No limitation is placed on the particular type or number of memories, or on the type of medium for memory storage.

### REFERENCE SIGNS LIST

- 1: Power control system
- 10: Power control apparatus
- 11: Display
- 13: Smart meter
- 14: Power conditioner (inverter)
- 15: Solar cell
- 16: Rechargeable battery
- 17: Distribution board
- 18: Load device
- 20: Controller
- 21: Communication interface
- 22: Memory
- 23: Device communication interface
- 24: Switching unit
- 25: Measurement gauge
- 30: Grid
- 40: Grid Energy Management System (grid EMS)
- 50: Grid memory
- 60: External network
- 100: Communication terminal

## Claims

1. A power control apparatus comprising:
a communication interface configured to transmit and receive signals;
a memory configured to store information related to power control to perform upon the communication interface receiving a signal of a notification related to power consumption; and
a controller configured to, upon the communication interface receiving a signal of the notification when a power control mode is set based on a predetermined condition, respond with a signal indicating agreement to content of the notification and perform power control based on the information stored in the memory.

2. The power control apparatus of claim 1, wherein the power control mode is an away from home mode for when a consumer is absent from a facility of the consumer.

3. The power control apparatus of claim 1 or 2, further comprising:
a device communication interface configured to communicate with a load device;
wherein based on the information stored in the memory, the controller controls the device communication interface to perform power control of the load device.

4. The power control apparatus of any one of claims 1 to 3, wherein the notification is a notification requesting a reduction in power supplied from a grid.

5. The power control apparatus of any one of claims 1 to 4, wherein the controller performs power control, based on the information stored in the memory, when the content of the notification matches a predetermined condition.

6. The power control apparatus of any one of claims 1 to 5, wherein the controller sets the power control mode when power consumption falls to a predetermined threshold or less in a predetermined time.

7. The power control apparatus of any one of claims 1 to 6, further comprising:
a measurement gauge configured to measure an amount of gas usage or an amount of water usage in a facility of a consumer;
wherein the controller sets the power control mode when the amount of gas usage or the amount of water usage measured by the measurement gauge falls to a predetermined threshold or less in a predetermined time.

8. The power control apparatus of any one of claims 1 to 7, further comprising:
a switching unit configured to allow switching into and out of the power control mode;
wherein the controller sets the power control mode when the switching unit is switched to power control mode.

9. The power control apparatus of any one of claims 1 to 8, wherein upon the communication interface receiving a signal of the notification, the controller transmits a signal indicating the content of the notification to a predetermined communication terminal.

10. The power control apparatus of claim 9, wherein the controller performs power control, based on the information stored in the memory, when receiving a signal from the predetermined communication terminal indicating agreement to the content of the notification.

11. The power control apparatus of claim 9, wherein the controller performs power control, based on the information stored in the memory, once a predetermined time elapses after the communication interface receives a signal of the notification.

12. The power control apparatus of claim 10 or 11, wherein the controller transmits, to the predetermined communication terminal, a signal indicating at least one of a start of power control based on the information stored in the memory, completion of the power control, and information on a result of the power control.

13. The power control apparatus of any one of claims 1 to 12, wherein the controller responds with a signal indicating agreement to the content of the notification and transmits an indication of absence from home.

14. A power control method comprising:
communicating to transmit and receive signals;
storing information related to power control to perform upon receiving a signal of a notification related to power consumption in the communicating step;
setting a power control mode based on a predetermined condition; and
controlling, upon receiving a signal of the notification in the communicating step when the power control mode is set in the setting step, to respond with a signal indicating agreement to content of the notification and to perform power control based on the information stored in the storing step.

15. The power control method of claim 14, further comprising:
performing device communication to communicate with a load device;
wherein based on the information stored in the storing step, the performing device communication step is executed in the controlling step to perform power control of the load device.

16. A power control program for causing a computer to execute instructions comprising:
communicating to transmit and receive signals;
storing information related to power control to perform upon receiving a signal of a notification related to power consumption in the communicating step;
setting a power control mode based on a predetermined condition; and
controlling, upon receiving a signal of the notification in the communicating step when the power control mode is set in the setting step, to respond with a signal indicating agreement to content of the notification and to perform power control based on the information stored in the storing step.

17. The power control program of claim 16, further comprising:
performing device communication to communicate with a load device;
wherein based on the information stored in the storing step, the performing device communication step is executed in the controlling step to perform power control of the load device.
